# EUROPEAN PATENT APPLICATION

(11) **EP 1 953 966 A1**
(43) Date of publication of application: **06.08.2008**
(21) Application number: 07425062.2
(22) Date of filing: 05.02.2007
(51) Int. Cl.: H04L 12/28, H04L 12/56

(54) **Naming method in ambient networks**

(71) Applicant: Siemens Networks S.p.A., 20126 Milano (IT)
(72) Inventor: Meago, Francesco, 23100 Sondrio (IT)
(74) Representative: Giustini, Delio

(57) **Abstract**

In a communication scenario comprising interconnected networks characterized by different access technologies, in particular the so-called Ambient Networks, a method for naming endpoints is described. Endpoints are referable to points of attachment to network elements for exchanging information messages between access network interfaces. According to the method, at least two Information Elements (lEs) are assigned to the endpoint, a first one is a locator that specifies at least an address of a communication protocol at any layer of a protocol stack used at the access network interface for that network element, and a second one uniquely identifies the endpoint at least within the scope of a negotiation of services between said network elements. The IEs used for naming the endpoints are included in a Flow Management tree structure. The used protocol stack may include a variety of protocols, such that said locator could indicate "L2" addresses (MAC addr, IMSI/TMSI, ...), "L3" addresses (IPv4/v6 addr), "L4" addresses (TCP/UDP/... ports), and/or "application level" addresses (SIP URLs, symbolic names, ...). The negotiation is consisting of a series of messages exchanged between interested network elements (negotiating entities), where within a single negotiation, many resources and services could be negotiated, e.g. transport service and communication service (fig.6).

## Description

### FIELD OF THE INVENTION

The present invention relates to the field of communication networks, and more precisely to a naming method for service negotiation in Ambient Networks

### BACKGROUND ART

**IST-2002-507134-AN/ WP2/D02,** Version 1.0, dated 2005-02-17, titled: "D2-2 MRA Architecture", published in the ambit of Sixth Framework Program on WWI Ambient Networks (AN), describes the background for the present invention (a useful Terminology is reported at the end of the description). The IST AN project aims to define a beyond-3G playground of future-proof networking mechanisms able to cope with a variety of interesting and diverse business scenarios where today's and future networks coexist and interoperate in a multi-access, multi-hop, multi-domain, multi-operator, user-centric environment that is capable to support a variety of services including unicast as well as multicast/broadcast services. Next **figures 1** to **3** are extracted from this document (called Ref.D2-2 hereafter). In substantial accordance with Ref.D2-2, paragraph 2.2, and in refinement and addition to it, the following definitions apply in the scope of this document.

**Definitions related to the Ambient Networks project:**
- **Ambient Network (AN):** an Ambient Network is a collection of nodes and/or devices, which expose their communication resources to User/other Ambient Networks in a controlled way through a well defined external interface, namely the Ambient Network Interface (ANI). Ambient Networks can compose, whereby the combination of their resources is made available through the ANI. An AN can execute AN Service agreements.
- **Ambient Network domain:** A set of nodes and/or devices related to a certain authority with particular AN functionality/roles such that it can establish AN service agreement with other AN domains, on behalf of all or certain parts of the domain. An AN domain is governed by the one authority (owner).
- **Generic Link Layer (GLL):** Generic functions which enable and facilitate efficient link-layer interworking among multiple, possible diverse, radio accesses.
- **Multi-Radio Access Architecture:** Architecture that supports the use of several radio access technologies.
- **Multi-Radio Resource Management (MRRM):** Generic functionality for the management of one or multiple radio accesses.
- **Radio Access (RA):** A typical, basic radio access is a direct wireless link between two communication entities characterized by a given radio access technology and an associated provider. In general, a radio access may consist of multiple basic radio accesses, combined in parallel and/or multi-hop fashion, and thus possibly consist of different radio access technologies and providers.
- **Radio Access Technology (RAT):** Any wireless technology. It can be an already defined (legacy radio access technology, like: GSM, UMTS, EDGE, GPRS, Bluetooth, HiperLAN, IEEE 802.16, IEEE 802.11....) or future access technology.
- **Multicast/Broadcast:** Transmission towards more than one destination.

Definitions that apply in particular to the matter of the invention:
- **Network Element (NE):** any device, terminal, router, access network controller, access point, etc. which can be part of a network.
- **Network:** is a generic term indicating one or more interconnected network elements, e.g.: interconnected terminals, PAN, WLAN, cellular access networks, etc. This definition is equivalent to "Ambient Network".
- **Access network:** is the access part of a network.
- **Access network services:** are services or functions of relevance for a generic access network, e.g. admission control, access selection.
- **Network Element services (NE services):** the same as Access network services, although in principle extending beyond the services of relevance for the access part of a network.
- **Endpoint:** Point of attachment to a Network Element (NE) for the exchange of information messages through a network interface. One NE may be characterised by more than one endpoint.
- **Data transfer:** a data session being transmitted according to a given transport service that may imply delay and buffering in some network elements.

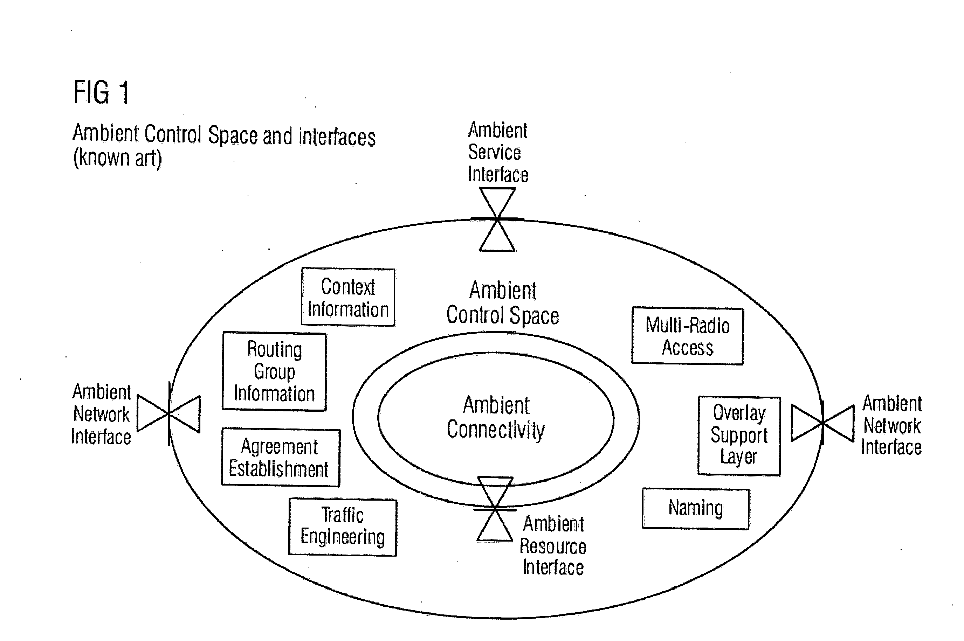

**Fig.1** schematizes a typical Ambient Network (AN) scenario characterised by a control plane, called Ambient Control Space (ACS), and an Ambient Connectivity (ACY) functionality. The ACS includes a number of functionalities capable of managing Multi-radio Access, Context information, mobility, security and even more. The ACS includes interfaces towards the higher layers of control functionality, such as user applications through the Ambient Service Interface (ASI), and also includes Ambient Resource Interfaces (ARI) towards the ACY, i.e. the lower layers of control functionality. ANs and their respective ACSs interact through the ANI. ASI, ARI and ANI are logical interfaces that may run over heterogeneous communication means and access technologies.

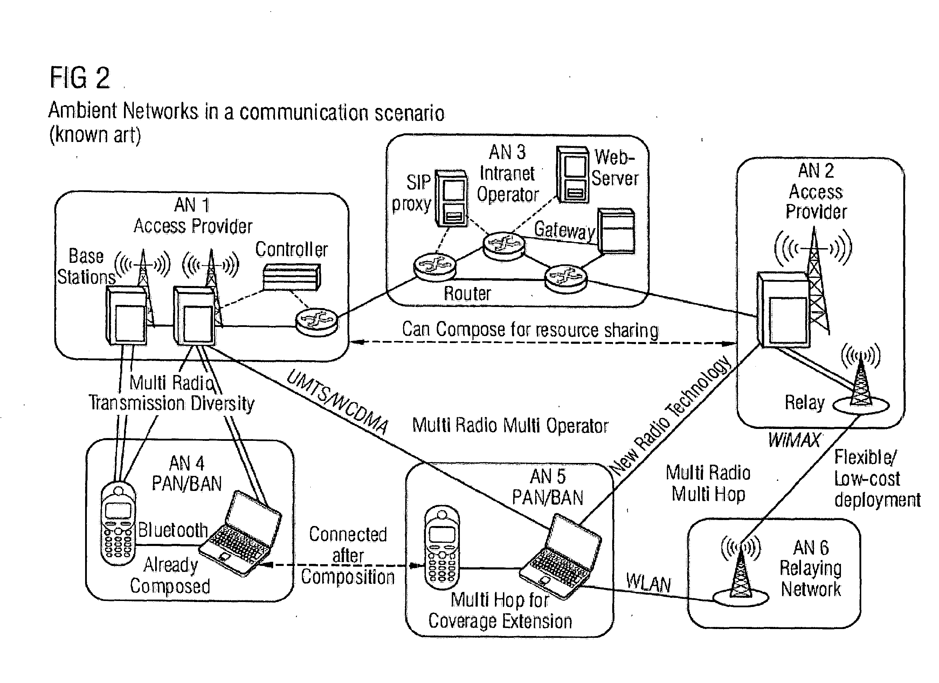

**Fig.2** illustrates different ANs (AN1 to AN6) in a communication scenario. Solid lines represent access technologies spanning from fixed lines to various radio access technologies. Dotted lines represent relationships established between ANs. With reference to **fig.2**, an Access Provider Network AN1 includes some Base Stations connected to a Controller (e.g.: BSC, RNC, etc.) and to a Router (e.g.: IP Router). A PAN/BAN AN4 includes TEs/UEs connected to each other by a Bluetooth link, and to the AN1's Base Stations through several access technologies using Multi-Radio Transmission Diversity (MRTD). PAN/BAN AN5 includes TEs/UEs connected to each other in such a way that one terminal currently out of coverage can still connect to the access providers through a multi-hop link via the other terminal, which happens to be under coverage of two access providers using different access technologies, therefore realising coverage extension through multi-hop. Not only, AN5 can exploit multi-radio multi-operator operations, thanks to the connection to different access providers. An IP Router inside AN1 is connected via terrestrial link (optical link) to an IP Router inside Intranet AN3, which is a content provider. AN3 further includes SIP Proxy, Web Server and Gateway interconnected by means of IP Routers. Network AN2 includes a Base Station respectively connected to: a Router of AN3, UE/TE inside AN5 via New Radio Technology (WINNER), and an internal Relay node. The latter is connected through a WiMAX link to a Relay Network AN6, which provides coverage extension in a flexible and low-cost manner. AN6 is further connected to the UE/TE of AN5 by a WLAN link. As a result, AN5 is connected to AN2 through multi-radio multi-hop routes.

**Fig.2** is a high-level view of the role and example capabilities of the Multi Radio Access (MRA). Basic types of composition are shown, e.g. ANs of different access providers can compose in order to enable resource sharing. Composition also allows for dynamic agreements between end-users, new types of access providers even including end-users themselves, thereby allowing for new ways of cooperation including new business roles.

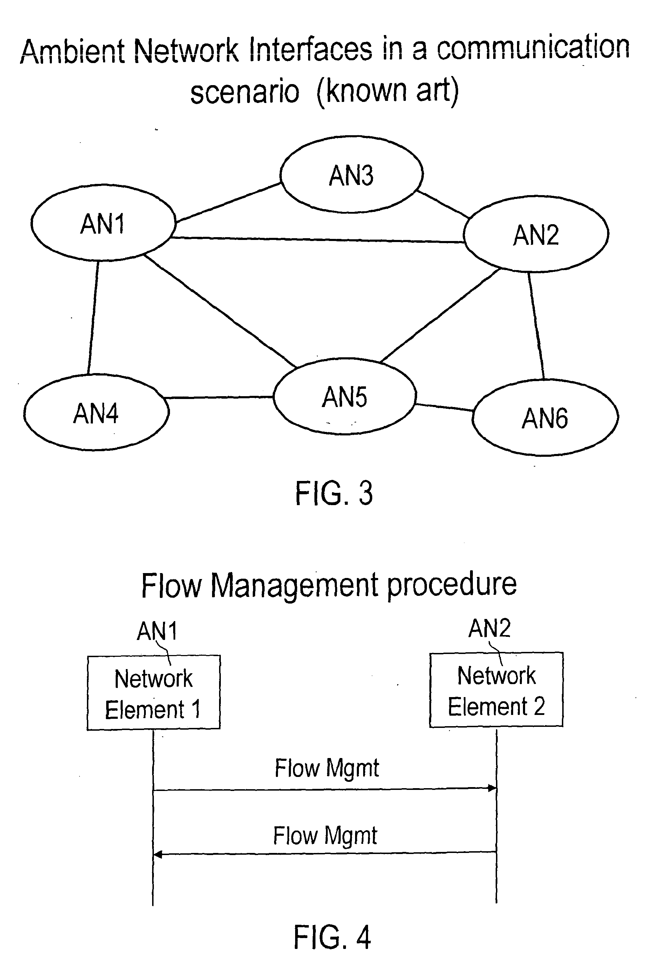

In **fig.3****,** ANI interfaces of the **fig.2** scenario are shown. ANI may exist between two ANs that do not have a direct connection between them (e.g. AN4 - AN5). Also, one single ANI may exist between different ANs that have more than one connection between them (AN1 - AN4). With reference to **fig.3****,** every network or communicating entity is an AN as far as it implements an ACS. The ANI is designed to support communication between different ANs, therefore between operator and user, service provider and user, different user devices, different devices within a local network, different operators, different service providers and so forth. The communication means and access technologies that are actually used for communication may be different: one main function of the ACS is to handle the underlying multiple-access infrastructure in an optimal way, allowing for improved system throughput, enhanced connectivity and user QoS experience.

In operation, according to the preceding figures and Ref.D2-2 paragraph 4.2, the MRA architecture consists of two main components: namely MRRM and GLL with functionality and mechanisms to optimise the utilization of radio resources in the connectivity layers ACY below the ARI. The design of the MRRM and GLL functionality and interfaces is a trade-off between high level management of the load and the aggregate resources and the instantaneous adaptation to specific link layer status. The MRA architecture must provide a smooth interface to IP and transport layer to better support the IP and reduce the end-to-end round trip time while minimizing the signalling overhead within the ACS of stand-alone as well as composed ANs. The basic split of functionality and mechanisms is considered in MRRM and GLL. More in particular:
- MRRM is responsible for joint management of radio resources and load distribution between the different Radio Accesses (RA). This includes the initial assignment of one or several RAs to a particular user connection, as well as further changes in this assignment. MRRM decisions may be based on load on the different RAs, QoS requirements and user preferences, characteristics of the available RAs, reception quality measurements, etc.
- GLL provides unified link layer processing, offering a unified interface towards higher layers and adaptation to the underlying RATs. The GLL is free to establish data transfers on the RAs selected by the MRRM, either sequentially or in parallel. GLL decisions can be based on link state information, QoS requirements and policy rules. GLL also enables efficient multi-hop forwarding of data packets across different RATS.

According to Ref.D2-2 section 6.2: the "MRRM concepts could also be reused and extended to cover fixed accesses for mobile/fixed access convergence."

The European patent application EP05425628.4, constituting a prior art under Article 54(3) EPC, discloses a method for managing bearer services among communication networks (AN1,..., AN6) with different access technologies, where each network includes controlling means executing the steps of:
- continuously calculating Bearer Service Availability Information Elements for specific access technologies on the basis of specific availability-related acquired information;
- continuously evaluating bearer service requests based on type of services, application and network needs;
- exchanging negotiation messages (ANEG_1,...,ANEG_4) for requesting and/or offering bearer services, said messages containing Bearer Service Description Information Elements associated to respective access routes each one specified from one route head to at least one route end passing through different access technologies.

### OUTLINED TECHNICAL PROBLEM

In the effort of developing solutions capable of founding the basis of future 4G communication networks, EP05425628.4 has defined the innovative concept of "available transport services" (there called "Bearer Service Availability") as the fundamental block of resource and load management. EP05425628.4 describes transport services where the origin and destination of said transport (there called "route head" and "route end") are identified with "Ambient Network ID (AN ID)" and/or "Cell ID", without providing other means for identification, and resulting therefore not sufficiently flexible and hardly integrable with current technologies that consider different identifiers. Extract from EP05425628.4: "Cell IDs could be used to describe the "Route end": the Cell IDs defined by 3GPP may be used for the sake of migration, however future Cell IDs may be identified by a suffix of an "AN ID"". Although it is suggested an integration between AN IDs and Cell IDs, the technical problem persists how this solution could cope with the heterogeneous scenario matter of the subjected invention.

From above, the open issue exists how to characterise the "endpoint" identifiers of said transport services, i.e. how to identify the points of attachment to the network elements respectively representing the source and destination of said transport services. Many solutions would be theoretically possible, spanning from the introduction of new identifiers to the usage of existing ones. In the former extreme an adaptation layer would be needed for translating the existing identifiers in new ones, in the latter extreme said transport services would be characterised by a great heterogeneity of identifiers. Still the former solution would suffer a lack of flexibility in the way existing identifiers have to be translated into new identifiers, while the latter solution would suffer from the lack of a homogenising factor.

### OBJECT OF THE INVENTION

Is an object of the invention to provide a method for identification of resources including network elements and related endpoints, transport services and data transfers. In particular, it is an object of the invention to provide a method for identification of endpoints, not necessarily bound to transport services, the method being valid for the most popular access networks and transport technologies.

### SUMMARY OF THE INVENTION

The invention achieves said object by providing a method for naming endpoints that are referable to points of attachment to network elements for exchanging information messages between access network interfaces belonging to communication networks with different access technologies, or ambient networks, as disclosed in claim 1. According to the invention, the method includes the steps of:
a) assigning to the endpoint a first information element that specifies at least an address according to a communication protocol at any layer of a protocol stack used at the access network interface for that network element, and
b) assigning to the endpoint a second information element uniquely identifying said endpoint within the scope of a negotiation of services consisting of two or more negotiation messages, including said first and second information elements, exchanged between network elements.

According to step a), the first information element is hereafter called "locator", as it acts as a locator, being able to "locate" the network element endpoint. Said protocol stack may include a variety of protocols, such that said locator could indicate "L2" addresses (MAC addr, IMSI/TMSI, ...), "L3" addresses (lPv4/v6 addr), "L4" addresses (TCP/UDP/... ports), and/or "application level" addresses (SIP URLs, symbolic names, ...).

According to step b), the second information element, hereafter called "Flow ldentifier" or "FlowID", is only required to be unique within the scope of a negotiation consisting of a series of negotiation messages of different type (e.g. advertising, discovery, setup, teardown, ...) exchanged between network elements (negotiating entities). Within a single negotiation, many services or resources could be negotiated: discovery/advertising of network elements and respective endpoints, negotiation of network element services, negotiation of communication services or transport services, negotiation of active connections and related data transfers. It should be noted that Flow ID is not required to be a globally unique identifier.

Without limitation, the Information Elements (IE) used for naming the endpoints are included in a Flow Management tree structure where the term "flow" and the related flow abstraction is defined homogeneously as an ACS abstraction of connectivity-layer abstractions (or resources) such as: nodes, links, paths and data transfers. Therefore it is emphasized that the term "flow" wherever used in the description and the claims (by itself or in the wording "flow abstraction", "flow identifier" or "Flow ID", "flow description", "flow management" and related messages), it does not refer to its classical meaning of data stream, but according to the definition of flow abstraction above.

The endpoint identified through the naming method can represent the originator of the negotiation message, the destination of the negotiation message, a single endpoint or the source endpoint of a transport service, the destination endpoint of a transport service.

According to another aspect of the invention, within the same negotiation message, another IE (third), of the same type and nature of the previously mentioned FlowID, is used in order to uniquely identify the Network Element for which the endpoint represents the point of attachment, this identification being valid at least within the scope of a negotiation of services between the negotiating network elements.

According to another aspect of the invention, the method of the invention includes the possibility to specify within a subsequent or correlated message (e.g. within the same negotiation) as another IE (fourth), of the same type and nature of the previously mentioned FlowlD, the identifier of a communication service or transport service between two or more network elements attached to respective endpoints. A communication service or transport service would therefore be described by the source and destination locators, plus a "FlowID" used in order to uniquely identify said communication service or transport service within the scope of the negotiation.

More than one communication service or transport service may share the same source or destination network element, attached to one or more endpoints, through the previously described naming method. Being the "FlowID" associated to more than one "Locator", it is not equivalent to the "AN ID" described in EP05425628.4 but it represents a substantial innovation in respect of it.

According to another aspect of the invention, the method of the invention includes the possibility to specify within yet a subsequent or correlated message as another IE (fifth), of the same type and nature of the previously described "FlowID", the identifier of an active data transfer running on a given communication service or transport service between two or more endpoints. A data transfer would therefore be described by the source and destination locators, plus a FlowlD. More than one data transfer may share the same communication service or transport service characterized by source and/or destination network elements and respective endpoints through the previously described naming method.

In more general, the possibility is comprised to specify as a Flow Identifier the identifier of an ACS-level resource including not only a generic link between two or more endpoints, or a specific transport service between two or more endpoints, but also:
■ a network element, including a group of network elements;
■ an endpoint, including a group of endpoints;
■ a service offered by the endpoint;
■ a data transfer on a given transport service.

According to another aspect of the invention, a clear distinction is performed between the identifiers characterizing the set of source and destination endpoints that identify the source and destination network elements, and the identifiers characterizing the set of source and destination endpoints from / to where data will be actually forwarded. These latter identifiers are another IE (sixth) of the same type and nature of the previously described locator, and another IE (seventh) of the same type and nature of the previously described FlowID.

According to another aspect of the invention, the possibility is given to specify the methodology through which involved locators have to be resolved: this includes indication of the type of locator management used (DEEP, E-DEEP, DNS service, HLR, VLR, ...), and/or a specific reference to the endpoint in charge of resolving the information.

According to another aspect of the invention, the possibility is foreseen to associate reference information to the FlowID. This reference information is of the same type and nature of the previously described FlowID and is here called ReferenceFlowID. This can be used e.g. to correlate identifiers of endpoints to their (reference) network elements, or identifier of data transfers to their (reference) transport services, the reference identifiers having been previously described within another message of the same negotiation. In other words, the referencing extension of the naming method allows referring or establishing links to resources that have been described in previous messages.

According to another aspect of the invention, the possibility is given to specify a field indicating a state associated to the locator. Said state can be connected, idle or obsolete. In the "idle" state, a paging procedure is needed in order to return the locator into "connected" state for the sake of exchanging data on a related transport service.

According to another aspect of the invention, the possibility is given to specify a lifetime for the "state" information. Once this lifetime is expired, the state information can be considered obsolete (or turned into "obsolete"), along with the associated locator.

### ADVANTAGES OF THE INVENTION

The following are examples of advantages provided by the invention:
■ Flexibility of the naming mechanism through reuse of existing identifiers, combined with simplified referencing thanks to the capability of grouping different identifiers of a same entity into a same group, allowing for convergence of naming schemes.
■ Capability to distinguish between data related endpoints and generic ones.
■ Possibility to specify the most appropriate name resolution method.
■ Simplified naming scheme thanks to the usage of a single identifier for the abstraction of all needed resources.
■ Possibility of referencing to other identifiers allow for association and easier description of transport services.
■ Possibility to include state and lifetime information allows for power-saving schemes to be usable for said transport services.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1****,** already described, shows an Ambient Control Space and Connectivity diagram of the so-called Ambient Networks;
- **fig.2****,** already described, shows an exemplary Ambient Network scenario;
- **fig.3****,** already described, highlights interfacing undergoing the Ambient Network scenario of **fig.2**;
- **fig.4** shows the basic message sequence chart of a flow management procedure availing of the naming method of the invention;
- **fig.5** shows the first level (root) of a tree structure that encompasses all Information Elements included in the messages used by the flow management protocol of **fig.4**;
- **figures 6** to **11** show successive levels of the Information Element tree, where in particular **fig. 6** includes the main Information Elements that characterize the endpoint according to the method of the invention, and **figures 7** to **11** (**11A** and **11B**) include Information Elements usable in the negotiation examples of the successive figures;
- **fig.12** to **fig.17** show message sequence charts referable to negotiations between Network Elements according to the method of the present invention. These examples implement: transport service negotiation (**fig.12**), paging (**fig.13**), handover (**fig.14**), load management (**fig.15**), load-aware access selection (**fig.16**) and access brokering (**fig.17**).

### DETAILED DESCRIPTION OF AN EMBODIMENT OF THE INVENTION

Based on a flow abstraction that abstracts all networking resources including nodes, links and their services, we provide here a messaging for the internetworking layer (ACS) of 4G communication networks.

The flow abstraction is here defined as the abstraction of all resources lying below the ACS and used by the ACS, therefore constituting the main building block for ACS operations. Also, for transport services and data transfers we define a flow abstraction not necessarily based on packets, but based on an abstract stream of data that is transported between NEs. The goal is to design a messaging in the easiest possible manner and with a maximum degree of homogeneity for procedures and messages, which can achieve very low RTT while being efficient in terms of messaging overhead and computational power.

A general description of interface based on the above assumptions is here described. The intention is to provide an interface description that can be applicable to any ACS interface based on the same flow abstraction.

For the general description of interface we simply envisage a Flow Management Procedure, including:
- Flow discovery / request / reservation / setup / reconfiguration / suspend / resume, including:
   o queries on abstracted nodes (NE capabilities information, location information, NE services, ...) and
   o queries on abstracted links, paths and data transfers (requests for transport services, resource reservation, measurements, ...).
- Flow advertising / response, including:
   o Reports on abstracted nodes (NE capabilities information, location information, NE services, ...), and
   o Reports on abstracted links, paths and data transfers (available transport services, measurements, failures, ...).
      Advertisements/responses can be required on request, periodically, on modification or based on particular events.

### Flow Management Procedure

The flow abstraction is here defined homogeneously as an ACS abstraction of connectivity-layer abstractions (resources) such as nodes, links, paths and data transfers. Flow Management can therefore be involved in the negotiation of access network services (as a subset of NE services, characterising the abstraction of the nodes of the connectivity layer) and communication services (characterising the abstraction of the links, paths and data transfers of the connectivity layer).

Every negotiated information can then be stored and maintained within NEs in appropriate databases (including Composition Agreements), with potential reference to the respective messages used for the negotiation.

The Flow Management procedure and the related flow abstraction is the same for each ACS interface. However, depending on specific NE services and functions, only the relevant subset of information elements and messages will be exchanged within the actual negotiation between specific NEs through the Flow Management procedure. Likewise, within a specific negotiation between NEs the flow abstraction that is matter of the negotiation (e.g. NE services) will likely only represent a subset of the resource that the flow abstraction can represent in general (e.g. NE services, transport services, ...), with varying degree of complexity (NE identifier, NE services, NE service characteristics, ...).

In other words, the Flow Management procedure and the related flow abstraction are designed to be the common networking language that every NE should speak and handle within 4G communication and internetworking scenarios.

An example of Flow Management procedure carried out between two Network Elements is illustrated in **fig.4**. Without limitation, the two Network Elements engaged in the end-to-end Flow Mgmt (Management) procedure are the ones indicated with AN1 and AN2 in **fig.2**. The procedure is extremely simple from a procedural viewpoint: because the same message structure is used in all cases, for query and report messages, discovery/advertising, setup/modify/teardown and negotiation of NE capabilities and services. This way, Flow Mgmt messages become pure signalling data of a signalling plane that relies on a totally separated transport plane, in line with GANS and NSIS recommendations. Through homogeneity of messages, we maximise the possibility to aggregate functionality within the same message, while simplifying protocols and related algorithms: one message could carry both a discovery and setup request, while another message could carry both an ACK and an advertisement.

With such an approach the interpretation of the single message will clearly be more complex due to the amount of information that Flow Mgmt could potentially carry in the most complex cases, but this can be handled as far as the meaning of the single messages are clearly specified. During message exchange, NE capabilities and services can be discovered, advertised and negotiated, forming a constituent part of the so called process of composition and composition maintenance. Also, this message exchange allows discovering, advertising, setup and manages transport services or communication services in more general.

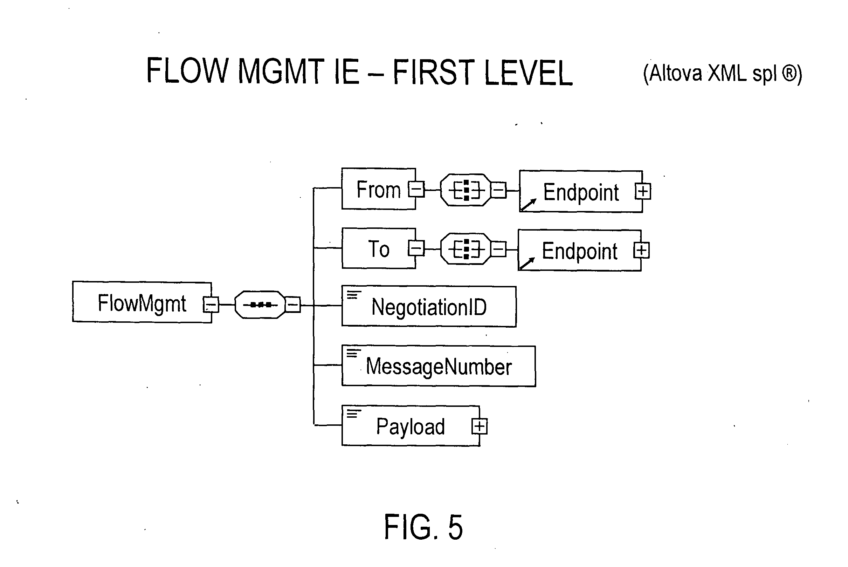

All messages used to implement Flow Management procedures are derivable form a whole message called **FlowMgmt,** describable by means of a tree structure of hierarchical Information Elements departing from a common root. All component IEs of a certain interest are reported in the successive **figures 5** to **11**, drawn based on well known Altova XMLSpy description tool. In the successive description the term "Information Element" is often let implicit.

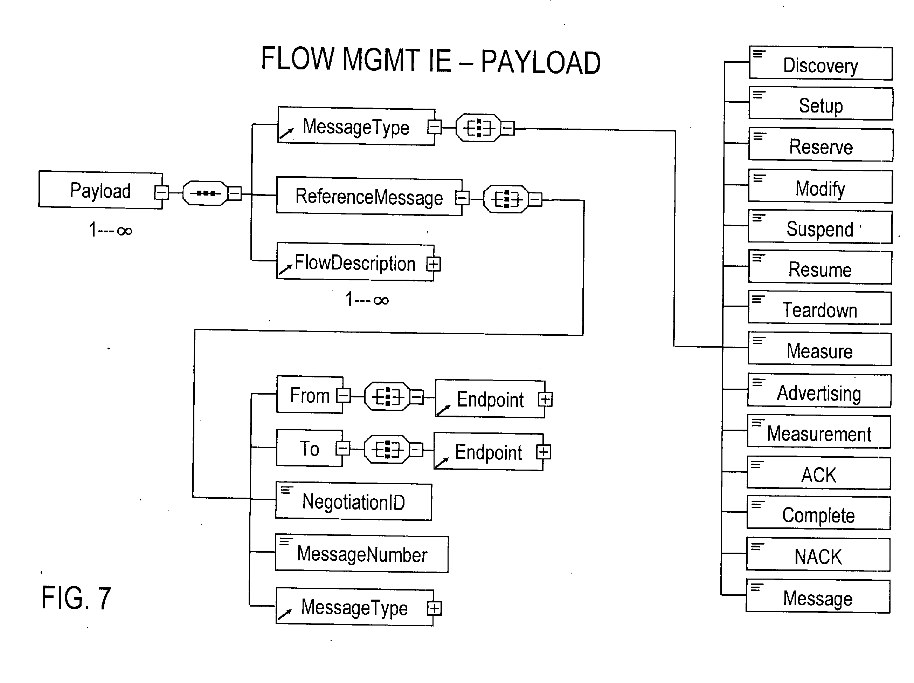

**Fig.5** illustrates the schema of **FlowMgmt** Information Element at the first level of the tree structure (root). With reference to the figure, **FlowMgmt** includes the following IEs:
- **MessageNumber,** provides message numbering within the same negotiation. Even numbers should be reserved to one signalling entity, odd numbers to the other signalling entity (more than one in case of a multicast communication).
- **From,** allows specifying the source network element of the FlowMgmt.
- **To,** allows specifying the destination network element of the FlowMgmt.
   Specification of From and To could happen, for example, only in the first message of a negotiation, or the From field could be specified in the reply messages of a multicast group in order to avoid possible replications on the MessageNumber. More than one network element or the identifier of a group could be specified as destination To of a Flow Mgmt, therefore indicating a multicast or broadcast message.
- **NegotiationID,** allows distinguishing which FlowMgmt messages (and MessageNumber) belong to the same thread. In case the NegotiationID is changed, it should be assumed that MessageNumbers and FlowIDs cannot be referenced anymore, while previous knowledge of detected set (the set of all detected access resources) can be preserved.
- **Payload,** allows qualifying the Payload as detailed in **fig.7****.**

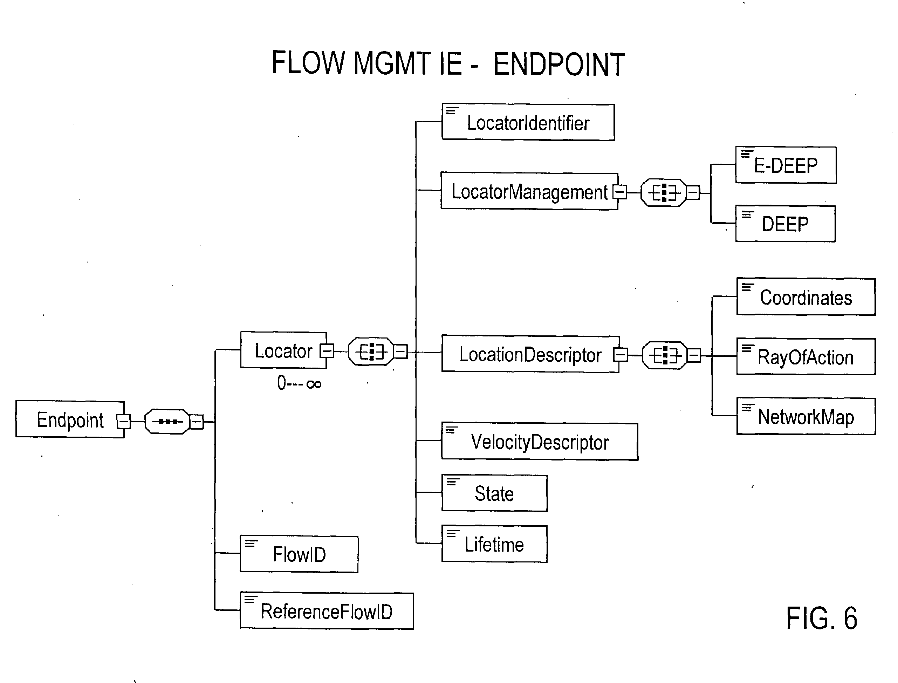

**Fig.6** illustrates the Flow Mgmt **Endpoint** which contains messages for flow management including:
- **Locator,** one or more.
- **FlowID,** as an identifier with significance within the scope of a negotiation that can reference to an endpoint and its related information (locator).
- **ReferenceFlowlD,** as an identifier that may be used to reference / link the information of this message to previously known information of which this information is a refinement or represents a refined instance.

Defining a Locator, it could be included:
- **Locatoridentifier,** of any naming-scheme specific format (e.g. IPv4 address, IPv6 address, ...), with the indication of the actual format. Note that a locator could also identify a domain.
- **LocatorManagement,** indicating the locator management system or a specific endpoint that can resolve the indicated locator (e.g. DEEP, E-DEEP).
- **LocationDescriptor,** indicating information that links the specified locator to geographic information such as:
   o Coordinates, according to a selected coordinates system.
   o RayOfAction, for indicating an approximate ray of cell
   o NetworkMap, indicating in selected format location information of the specified
   locator.
- **VelocityDescriptor,** indicating speed and direction of the endpoint in a selected format.
- **State** and **Lifetime,** indicating potential states (idle/connected) and validity timeframes applying to the same locator. This is particularly useful for paging related operations.

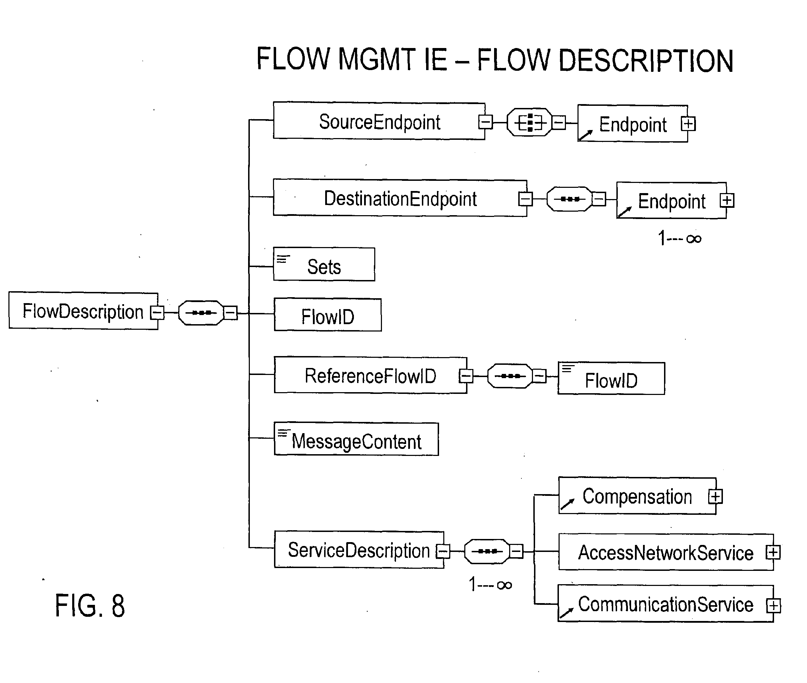

**Fig.7** illustrates the Flow Mgmt **Payload** which contains messages for flow management including:
- **MessageType,** indicating the type of message and therefore discriminating among the set of possible ways to interpret it.
- **ReferenceMessage,** for potentially make explicit reference to a previous message, whose first-level structure of FlowMgmt has been depicted in **fig.5****.**
- **FlowDescription,** describing any issue related with flows within this message. The FlowDescription component is described in **fig.8****.**

In its turn MessageType may include one or more indications among:
- Discovery (of other NEs, NE services or transport services).
- Setup (NE services or transport services).
- Reserve (resources typically for transport services).
- Modify (NE services or transport services including handover).
- Suspend (to temporarily suspend a service).
- Resume (to resume a service that was temporarily suspended).
- Teardown (to stop a service).
- Measure (to require measures).
- Advertising (capabilities including NE services or transport services).
- Measurement (to provide measurements).
- ACK (to acknowledge an action).
- Complete (to inform that an acknowledged action was completed).
- NACK (to unacknowledge an action).
- Message (to provide general purpose messages including warning and error messages).

These MessageTypes, lEs, wherever applicable, could be used in relation to both Access Network Services and CommunicationServices.

The combined use of MessageType(s) allows for example:
o Discovery + Reserve: To reserve a resource immediately if possible. If not possible, it could be implicit to reply with the best offer of similar characteristics.
o Discovery + Setup + Measure: to setup a flow as soon as possible and provide periodical measurements on the average delay.

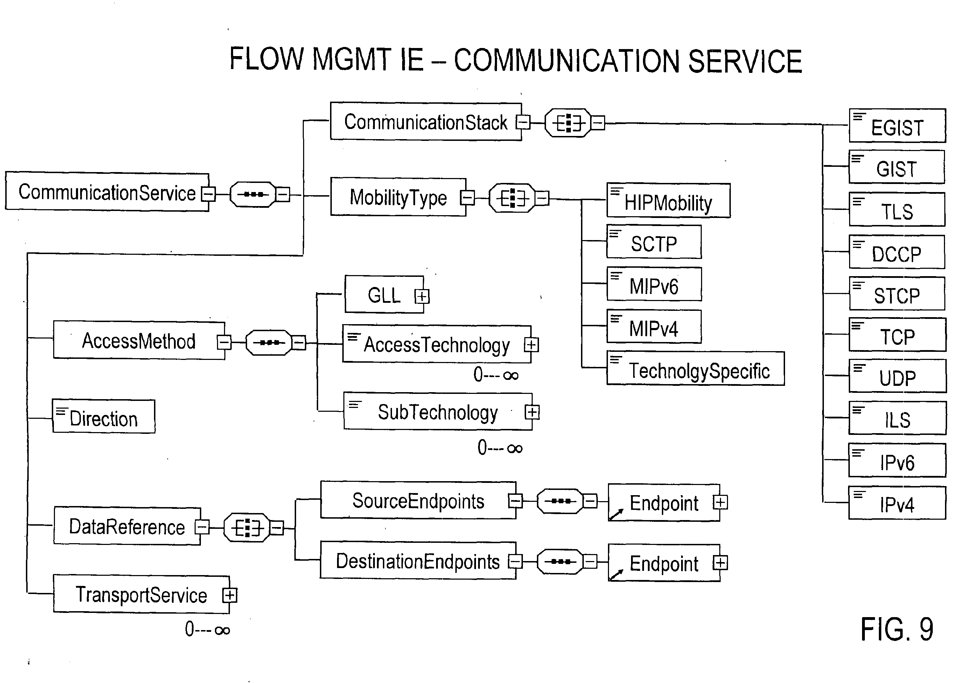

**Fig.8** illustrates the **FlowDescription** which includes indication of the endpoints to which it refers. The following components are included:
- **SourceEndpoint,** used for describing the source endpoint of a flow, or to describe the single endpoint in case the flow would only represent the abstraction of a single endpoint.
- **DestinationEndpoints,** used to describe the one (or more in case of multicast/broadcast) destination endpoint of a flow.
   It should be noted that Source and Destination Endpoints in FIowDescription could be different endpoints than the ones exchanging messages in the related negotiation.
- **Sets,** is potentially used to reference to a specific set (Detected, Candidate, Active), so that one entity can discover or advertise the detected set of a given endpoint, or the candidate or Active Sets (AS) associated to a given flow.
- **FlowlD,** in order to assign an ID to the described flow for future reference. This ID serves for example as an identifier for discriminating a number of transport services between the same endpoints, or for discriminating a number of data transfers on the same transport service.
- **ReferenceFlowID,** in order to make reference to another flow previously described within the negotiation. This for the purpose of e.g.
   o Making reference to the endpoints between which a transport service is being described, or
   o making reference to the transport service on which a data transfer is being described, or
   o in general for making reference to a flow.
- **MessageContent:** to include potential warning/error messages related to the indicated flow.
- **ServiceDescription:** for describing the service implied by the described flow. This IE in its turn may include:
   - Compensation, describing service-related compensation data.
   - AccessNetworkService describing services of the Network Element.
   - CommunicationService, describing communication services for the flow, as detailed in **fig.9****.**

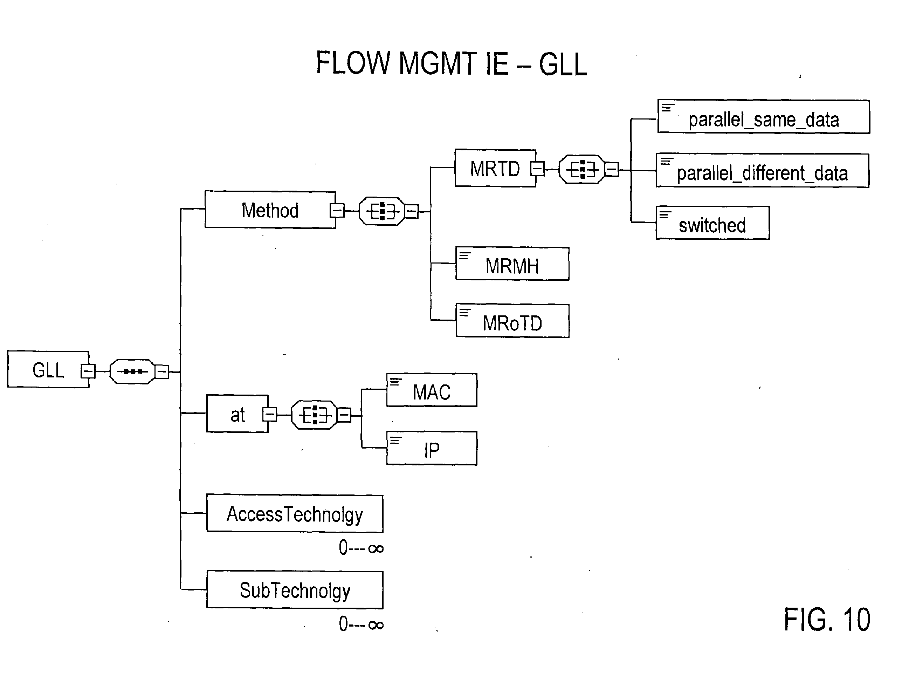

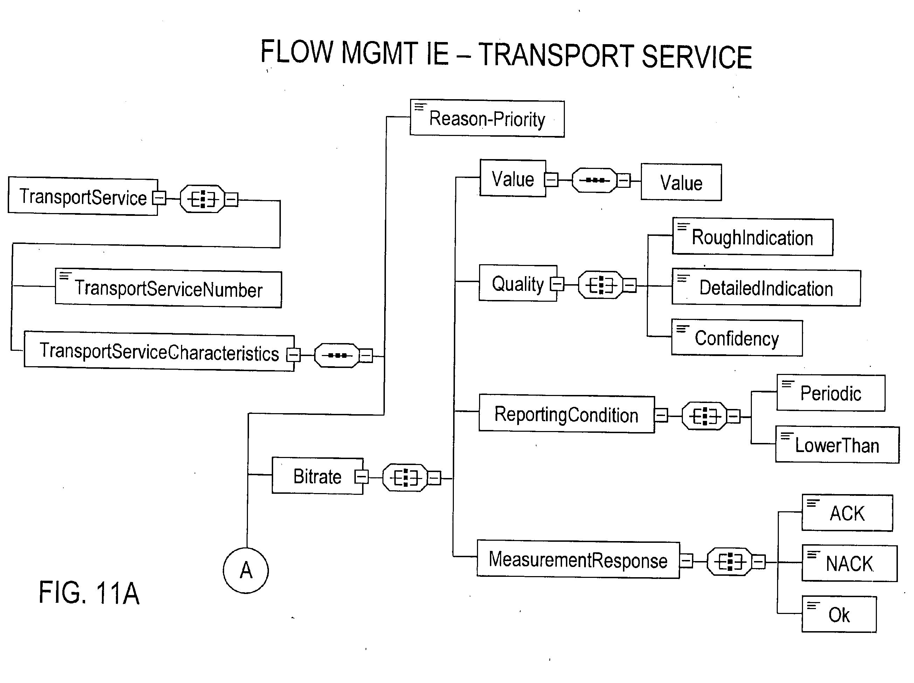

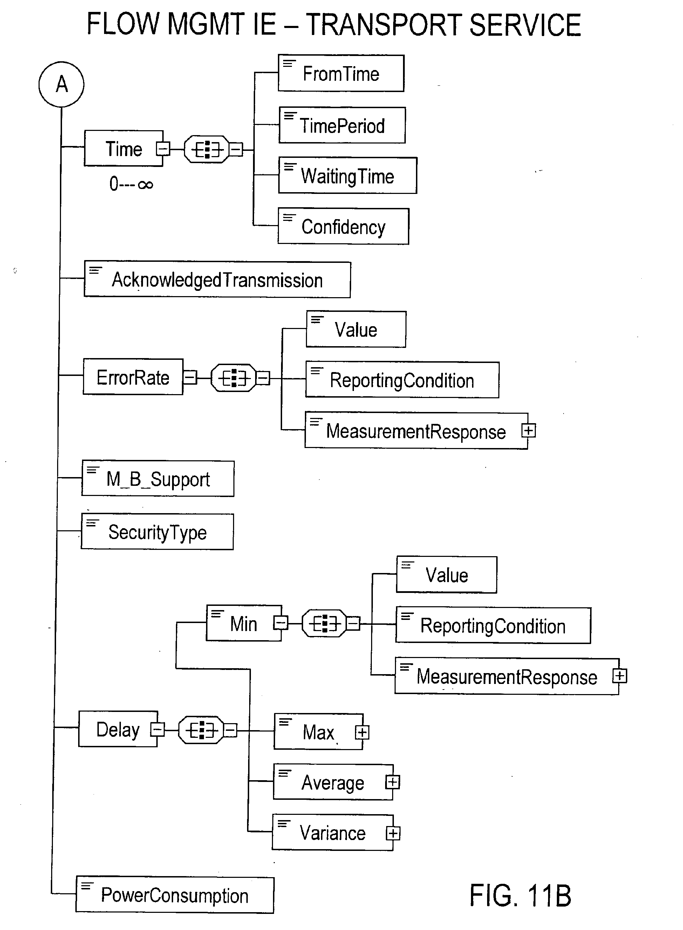

**Fig.9** illustrates the **CommunicationService** IE which may include:
- **CommunicationStack,** describes the protocol stack used for communication, through specification of one or more of the following: EGIST, GIST, TLS, DCCP, SCTP, TCP, UDP, ILS, IPv4, IPv6.
- **MobilityType,** indicates the type of mobility that applies to the communication: HIPMobility, SCTP, MIPv4, MIPv6, TechnologySpecific.
- **AccessMethod,** indicates how communication is / can be performed at the point of network attachment:
   - GLL, specifying the GLL mechanisms offered (advertising messages), required (discovery messages) or to be setup (setup messages), indicating also the used technologies and the policy how to use them. This IE is detailed in **Fig.10****.**
   - AccessTechnology, indicating the access technologies offered, required or to be setup: UMTS, GSM, IEEE802.11, Winner, IEEE802.16, Bluetooth, IrDa, USB, LAN, ADSL.
   - SubTechnology, indicating access sub-technologies offered, required or to be setup: FDD, TDD, FDD-HSDPA, FDD-HSUPA, FDD-HSxPA, TDD-LCR, TDD-HCR, GSM-CS, GSM-HSCSD, GSM-ECSD, GSM-EGPRS.
- **Direction,** indicates the direction of the flow: DL (downlink), UL (uplink), UL and DL (bidirectional). In some cases, only unidirectional flows may be handled by the network, while higher up in the hierarchy bidirectional flows may be constructed.
- **DataReference,** can be used to specify the locators and FlowlD of Source and Destination endpoints where data is/will be available for transmission /transmitted. Along with a Flow Setup or Modify message on the control plane, respective data may need to be ready for forwarding on the user plane in the appropriate locators. If not indicated, it is assumed that the endpoints used for data transfer are the same endpoints of the transport service.
- **TransportService,** is detailed in **fig.11****.**

**Fig.10** illustrates the **GLL** IE which may include:
- **Method,** in its turn including:
   - MRTD, detailed as:
      - Parallel_Same_Data,
      - Parallel_Different_Data,
      - Switched.
   - MRMH,
   - MRoTD.
- **at,** in its turn including:
   - MAC,
   - IP.
- **AccessTechnology,** describing the access technologies involved (UMTS, GSM, IEEE802.11, IEEE802.16, Winner, Bluetooth, IrDa, USB, LAN, ADSL).
- **SubTechnology,** describing the access sub-technologies involved (FDD, TDD, FDD-HSDPA, FDD-HSUPA, FDD-HSxPA, TDD-LCR, TDD-HCR, GSM-CS, GSM-HSCSD, GSM-ECSD, GSM-EGPRS).

**Fig.11** (10A and 10B) illustrates the **TransportService** IE corresponding to a structured information. Standard transport services may be for example:
**1. M / B Class 1:** Propagation delay is < 250 ms. Reserved resources are used, therefore the resource can be made available immediately or in a rather short time. Residual BER < 10⁻³. UNACK.
2. **LAN-like delay:** Propagation delay is < 5 ms. Residual BER < 10⁻⁵. UNACK.
3. **Very low delay:** Propagation delay is < 20 ms. Residual BER < 10⁻⁵. UNACK.
4. **Conversational:** Propagation delay is < 80 ms. Residual BER < 10⁻³. UNACK.
5. **Streaming:** Propagation delay is < 250 ms. Residual BER < 10⁻³. UNACK.
6. **Interactive:** Propagation delay is < 3 s. Residual BER < 10⁻⁵. ACK.
7. **Background:** Propagation delay is < 1 min. Residual BER < 10⁻⁵. ACK.
8. **Best Effort:** Propagation delay can be any. Residual BER < 10⁻⁵. UNACK.

TransportService IE may include:
- **TransportServiceNumber,** indicating either a standard transport service or a non-standard one defined within the scope of a negotiation. Value "ANY" could be used for advertising/discovery of non-better-specified transport services, which characteristics may be better specified later on during the negotiation.
- **TransportServiceCharacteristics** includes:
   - Reason-Priority: used to indicate the priority of the transport service. Values include: ControlSignalling, HighPriority (including soft handover, necessary handovers, emergency services), Any (default, including cell change due to load/traffic reasons, Directed Retry or establishment of new generic services).
   - Bitrate, including any bitrate related indication.
   - Time, providing time indications for which the transport service description is valid.
   - AcknowledgedTransmission, indicating if the transmission is acknowledged or not. If not indicated, both may be possible.
   - ErrorRate, providing any error-rate related indication.
   - M_B_Support, indicating a multicast/broadcast transport service (e.g. when two endpoints are specified as destination endpoints).
   - SecurityType, indicating the type of security mechanisms that apply to the transport service.
   - Delay, indicating the delay that the data experiences travelling from the source endpoint to the destination endpoints. It provides any related indication.
   - PowerConsumption, providing indication of characteristic power consumption related to this transport service and the mentioned AccessMethod, as according to a reference scale.

Bitrate may include:
- Value: indicating a list of possible bitrate values that can be provided in advertising messages, the required bitrate in discovery messages.
- Quantity indicates in advertising messages the number of transport services of the indicated characteristics and bitrate that can be provided. This can be done through a Roughlndication (AFew, Many), or through a Detailedlndication (integer) and a Confidency (indicating the mean squared error that applies to the Detailedlndication of quantity).
- ReportingCondition, used to specify the condition that should trigger a reporting on the current bitrate of the transport service (e.g. periodic every x seconds, or when a lower threshold is crossed).
- MeasurementResponse, a message that may indicate ACK, NACK or Ok. Note that in a measurement message, a bitrate value may be indicated in the Value field.

Time may include:
- FromTime: date and time from which the indicated transport service is available or required. If omitted, it is from the present time.
- Timeperiod: timeperiod during which the indicated transport service is available or required.
- WaitingTime: used in advertising messages to indicate an expected waiting time from the time indicated in "From time" to transmit data over the transport service. It may account for queuing and or resource reservation processes.
- Confidency: used in advertising messages to indicate the likeliness that the transport service will be available in the indicated Timeperiod (it is an indicator of reliability).

ErrorRate may include:
- Value: indicating the offered/required error rate (residual) in advertising/discovery messages.
- ReportingCondition, specifying the condition that should trigger a reporting on the current error rate on the transport service (e.g. periodic every x seconds, or when a higher threshold is crossed).
- MeasurementResponse, a message that may indicate ACK, NACK or Ok. Note that in a measurement message, an error rate value may be indicated in the Value field.

Delay may include indications for the values:
- Min: used specially in multi-hop operations to calculate the minimum delay on a chain of transport services in sequence.
- Max: to indicate the maximum delay.
- Average: to indicate the average delay.
- Variance: to indicate a delay variance.

For each of these delay values, indication may be included for:
- Value: indicating the offered/required delay value in advertising/discovery messages.
- ReportingCondition, used to specify the condition that should trigger a reporting on the current delay value on the transport service (e.g. periodic every x seconds, or when a higher threshold is crossed)
- MeasurementResponse, a message that may indicate ACK, NACK or Ok. Note that in a measurement message, a delay value may be indicated in the Value field.

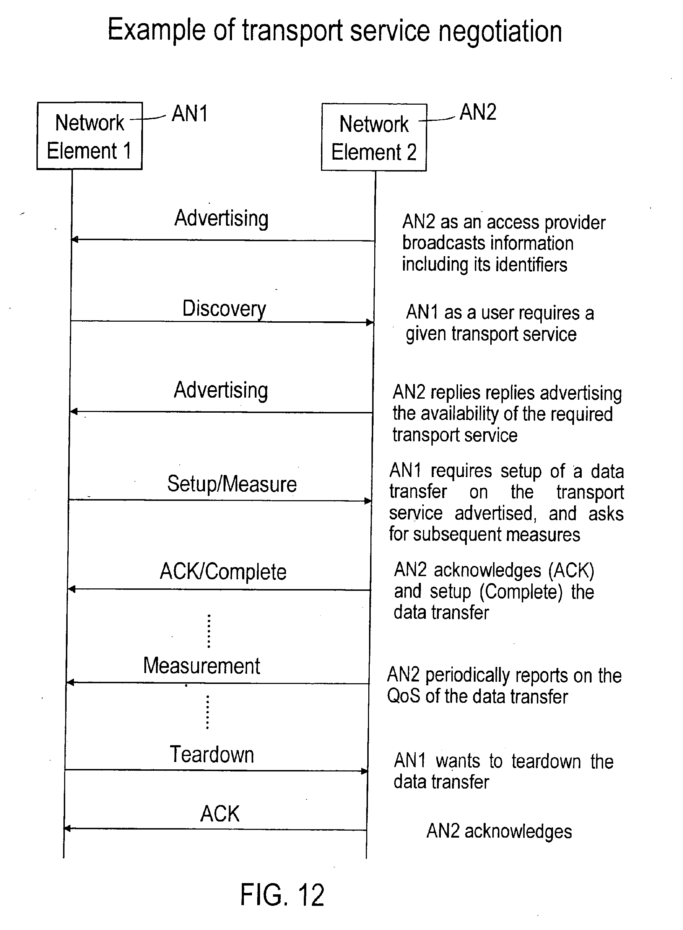

In **fig.12** to **fig.17****,** FlowlD is assumed to be an integer. Odd numbers will be reserved to one negotiating entity, pair numbers are reserved to the other. Examples of the assigned values are indicated in bold within parenthesis (e.g. FlowlD (1)).

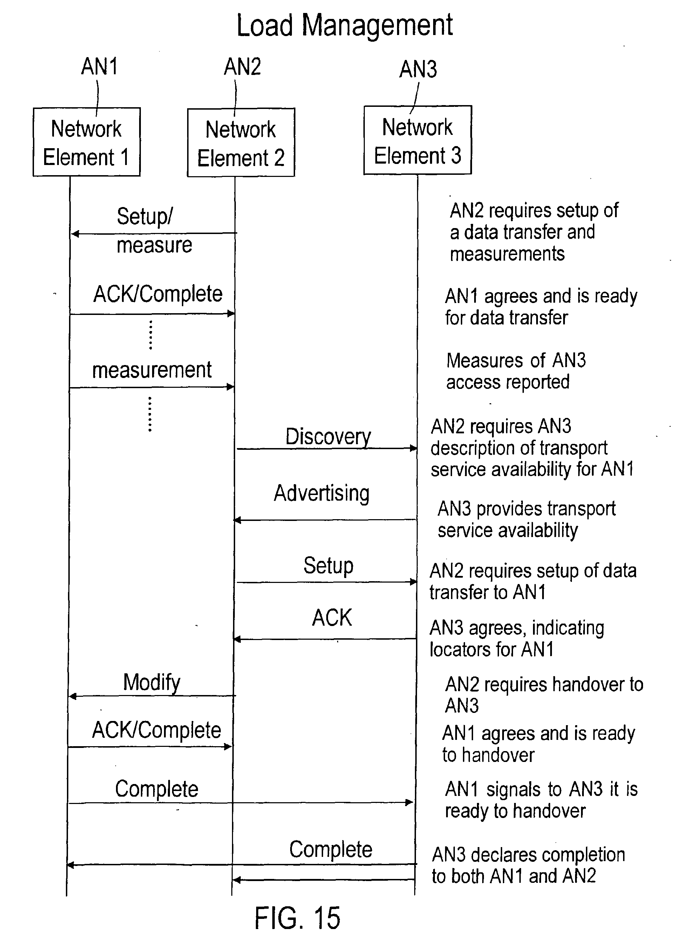

In case the figure exemplifies more than one negotiation (**fig.15** to **fig.17**), the same rules for assigning values to FlowID apply. However in different negotiations the same values can be assigned to FlowIDs identifying different resources, as FlowID is unique only within the scope of the same negotiation. In these figures the value assigned to FlowID is indicated with the notation (**x,n**), where **x** is the assigned integer simply indicated through a letter, and **n** a number identifying the negotiation (e.g. NegotiationID).

**Fig.12** shows a message sequence chart for transport service negotiation, where:
(a) Through a FlowMgmt message with MessageType "Advertising", an advertisement (typically using broadcast) is sent by AN2 including AN2 endpoint locator and related FlowID **(3)** within Endpoint IE **(****fig.6****)** included in From IE **(****fig.5****),** another FlowlD **(1)** (**fig.8**) is used for identifying the network element AN2 itself, within the scope of the negotiation. In case the FlowlD identifying the network element was not included, the network element could have been identified through the FlowlD identifying the endpoint.
(b) In reply to the advertisement, AN1 sends a discovery message (MessageType "Discovery") to AN2, where AN2 is identified within the Endpoint IE within the To IE of **fig.5** through the FlowlD **(3)** for the endpoint, and through the ReferenceFlowID **(1)** for the network element. AN1 includes its identification within the Endpoint IE within the From IE of **fig.5** through the FlowID **(4)** and respective locators for the endpoint, and through the ReferenceFlowID **(2)** for the network element AN2, all these FlowIDs being valid within the scope of the negotiation. In the discovery message AN1 includes within the Flow Description IE the respective FlowlD **(6)** identifying the transport service, the description of the required communication service and transport service. Within the Flow Description IE, a number of characteristics are specified including communication stack, access method, direction (e.g. uplink), TransportServiceNumber (type of service), required bitrate, etc.
(c) In reply to the discovery, AN2 sends an advertising message (MessageType "Advertising") to AN1. Within the Flow Description IE, using the same FlowlD (**6**) of the previous step for identifying the same transport service, the availability of the transport service is indicated through a bitrate indication (e.g. equal or higher to the one requested by the user) and optionally through the quantity indication.
(d) Based on the availability indication from AN2, AN1 requests the setup of a data transfer (MessageType "Setup"). For identifying the data transfer and for linking it to the transport service, AN1 indicates within the Flow Description IE respectively a different Flow ID **(8)** for the data transfer and a ReferenceFlowID **(6)** as a reference to the FlowID **(4)** for identifying the transport service. For this purpose, AN1 may further indicate within DataReference specific locators and related FlowID (**10**) applying to a specific AN1 selected endpoint for data transfer. Within the same message, AN1 can request the initiation of a measurement procedure on the same data transfer by indicating also the type "Measure" under MessageType, and by specifying a ReportingCondition as a field of the measurement of interest (e.g. under ErrorRate).
(e) As a reply, AN2 acknowledges the message by specifying "ACK" in the MessageType, and Flow ID **(8)** within the Flow Description IE, meaning that the data transfer can be setup. Through the field DataReference, AN2 may further indicate specific locators and related FlowID (**5**) applying to the AN2 endpoint that will be used for data transfer. AN2 also includes "Complete" under MessageType meaning that the data transfer can start as indicated by AN1.
(f) AN2 will send measurements to AN1 as previously indicated, e.g. including the measurement of the Error Rate under the field Value of the field ErrorRate. Again for identifying the data transfer the same FlowlD (**8**) will be used within Flow Description IE.
(g) AN1 decides to teardown the data transfer, as no more data needs to be sent. It does it by sending a message where "Teardown" is specified under MessageType, using within the Flow Description IE the FlowID **(8)** that identifies the data transfer.
(h) AN2 acknowledges releasing the endpoints for the data transfer: related locators may be turned to "obsolete" and may be reused for other purposes.

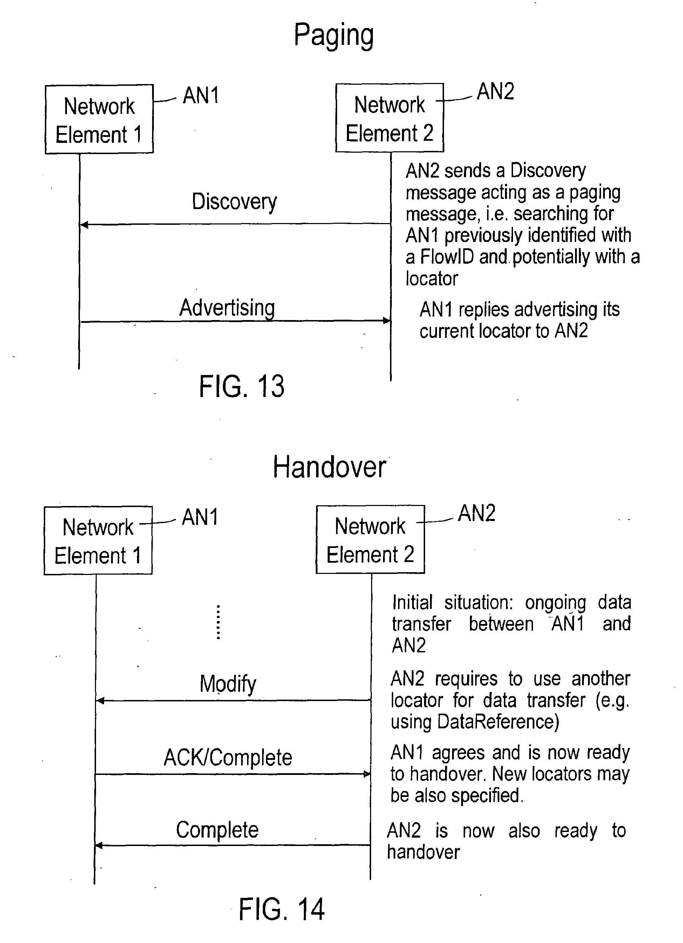

**Fig.13** shows a message sequence chart performing paging, where:
(a) Through a FlowMgmt message with MessageType "Discovery", a message (typically using a broadcast within a predetermined area or set of cells) that acts as a paging message is sent by AN2, including AN2 identifiers and AN1 identifiers for paging, respectively within the From IE and the To IE of **fig.5****.** Such AN1 identifiers for paging include a FlowID **(1)** identifying the network element AN1 and/or one of its endpoints, and potentially some related locators. The "State" IE in **fig.6** of such endpoint may be specified as "ldle".
(b) Through a FlowMgmt message with MessageType "Advertising", and from the cell where AN1 is currently located, AN1 replies to AN2 indicating the current locators for the endpoint identified by FlowlD **(1).** The "State" IE in **fig.6** of such endpoint may now be indicated as "Connected", while a value may be set for the "Lifetime" IE indicating the validity time of said locators after which the endpoints may turn into the state Idle.

**Fig.14** shows a message sequence chart referable to the negotiation between two Network Elements according to the method of the present invention where:
(a) In a situation such that an ongoing data transfer between AN1 and AN2 is established (any direction), through a FlowMgmt message with MessageType "Modify", AN2 requires usage of another locator (e.g. associated with another cell) for data transfer. AN2 does this by indicating SourceEndpoint IE and/or DestinationEndpoint IE the new locator(s) for data transfer associated to respective FlowIDs indicated within former messages. These IEs could be the ones within FlowDescriptionlE of **fig.8**, or the ones within DataReferencelE of **fig.9**, depending on previous messages within the negotiation.
(b) Through a FlowMgmt message with MessageType "ACK" and "Complete", AN1 agrees and indicates it is now ready to handover. If needed, new locators new locator(s) for data transfer associated to respective FIowIDs may also be indicated as from step (a)
(c) Through a FlowMgmt message with MessageType "Complete", AN2 indicates it is now also ready to handover.

It should be noted that the procedure is valid for both cases of "network initiated" handover and "terminal initiated" handover, according to classical definitions. Slight modifications are still possible: e.g. the last "Complete" message may be avoided, or within step (b) the "ACK" may be implicit by the "Complete", and so on.

**Fig.15** shows a message sequence chart referable to three negotiations between three Network Elements according to the method of the present invention where:
(a) in a first negotiation, AN2 requires AN1 setup of a data transfer identified with FlowlD **(w,1)** and a related measurement procedure.
(b) Within a reply message of the first negotiation, AN1 agrees and is ready for data transfer.
(c) During data transfer, within the first negotiation AN1 reports measures to AN2, indicating the availability of an AN3 access (discovered by listening to broadcast signals), through indication within FlowDescriptionlE e.g. of
   c1. the FlowlD **(h,1)** identifying a new potential transport service,
   c2. a SourceEndpointlE describing e.g. the new measured endpoint identified by AN3 locators of the new access and an associated FlowID **(y,1),** plus description of the related AN3 network element through ReferenceFlowID **(j.1).**
   c3. a DestinationEndpointIE describing e.g. the potential AN1 endpoint on the new access identified by locators (obtained by e.g. autoconfiguration) and an associated FlowID **(z,1),** plus description of AN1 network element through ReferenceFlowID **(k,1).**
(d) AN2 envisions the possibility to transfer AN1 related data transfer under AN3 for load management reasons, due to high load conditions in the access resources of AN2 used by AN1. Therefore, in a second negotiation, AN2 requires AN3 the description of the availability of a given type of transport service for AN1, the transport service being identified in that negotiation with FlowlD **(x,2).** AN1 is identified as DestinationEndpointlE through a FlowlD **(z,2)** and optionally by the related autoconfigured locators.
(e) Again within the second negotiation, AN3 replies advertising the transport service availability for the required service identified with FlowID **(x,2)**.
(f) Within the second negotiation, AN2 requires AN3 setup of data transfer to AN1 on the advertised transport service FlowID **(x,2).**
(g) Within the second negotiation, AN3 agrees and indicates locators that will be used by AN1 (therefore resolving potential conflicts), associated with the respective FlowlD (**z,2**). AN2 may start forwarding to AN3 any incoming data directed to AN1.
(h) Within the first negotiation, AN2 requires AN1 to modify the locators associated to the data transfer FlowID (**w,1**). AN2 does this by indicating in SourceEndpoint IE and/or DestinationEndpoint IE the new locator(s) for data transfer defined by AN3, therefore requiring handover to AN3.
(i) Within the first negotiation, AN1 agrees and declares completion of the handover. AN1 radio interface towards AN2 may be switched of at this stage. AN2 may start forwarding to AN3 data directed to AN1 at this stage.
(j) Within a third negotiation, AN1 sends AN3 a Complete message, indicating e.g.
   a. the FlowID **(h,3)** identifying the data transfer,
   b. the ReferenceFlowID identifying the related transport service,
   c. the SourceEndpoint IE and DestinationEndpoint IE identifying the new locator(s) for data transfer defined by AN3, along with respective FlowIDs for endpoints and network elements.
(k) AN3 declares completion to both AN1 and AN2.

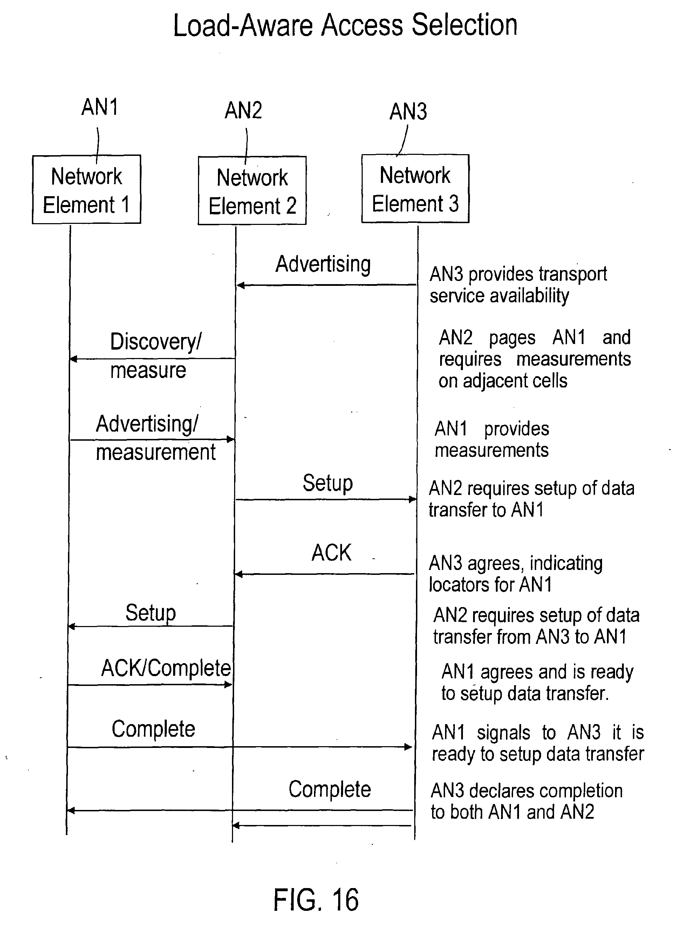

**Fig.16** shows a message sequence chart referable to "Load Aware Access Selection" including three negotiations between three Network Elements according to the method of the present invention where:
(a) in a first negotiation, AN3 advertises AN2 transfer service availability for a transport service identified with FlowlD.
(b) In a second negotiation, AN2 pages AN1 and requires measurements on adjacent cells.
(c) In the second negotiation, AN1 replies to the paging and provides the required measurements.
(d) In the first negotiation, AN2 requires setup of a data transfer from AN3 to AN1.
(e) In the first negotiation, AN3 agrees indicating appropriate locators for AN1.
(f) In the second negotiation, AN2 requires AN1 setup of a data transfer from AN3 to AN 1.
(g) In the second negotiation, AN1 agrees and is ready to setup data transfer.
(h) In a third negotiation, AN1 signals to AN3 it is ready to setup the data transfer.
(i) In the third and first negotiation, AN3 declares completion to both AN1 and AN2 respectively.

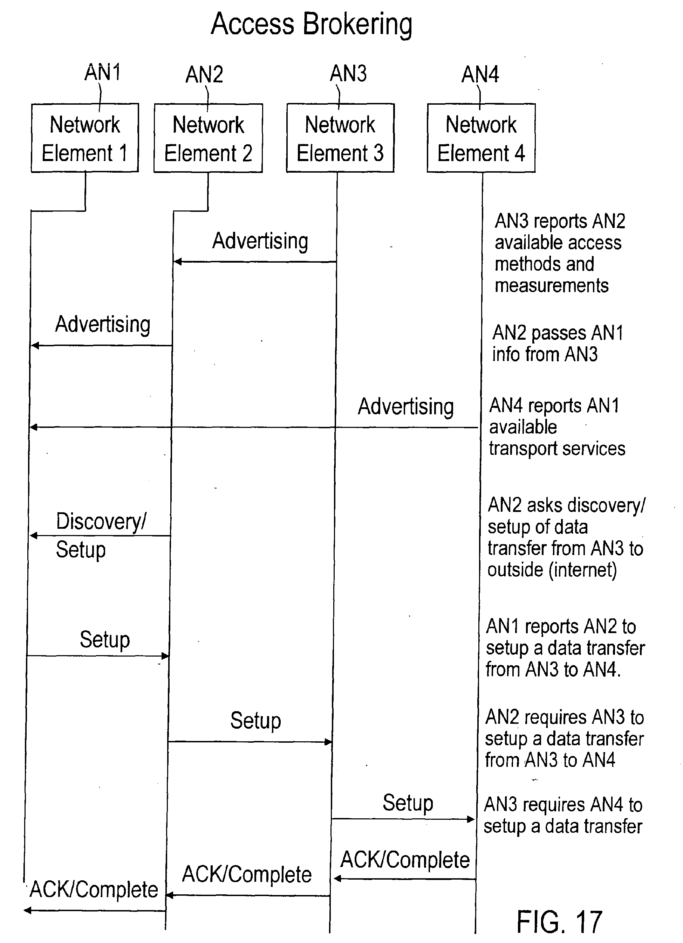

**Fig.17** shows a message sequence chart referable to "Access Brokering" including four negotiations between four Network Elements according to the method of the present invention where:
(a) in a first negotiation, AN3 reports AN2 available access methods and measurements.
(b) In a second negotiation, AN2 passes AN1 the information received from AN3.
(c) In a third negotiation, AN4 reports AN1 available transport services.
(d) In the second negotiation, AN2 requires AN1 discovery of a transport service and potentially setup of a data transfer on the same transport service from AN3 to outside (e.g. to the internet).
(e) In the second negotiation and in reply to AN2 request, AN1 reports AN2 to setup a data transfer from AN3 to AN4 on a given transport service. It should be noted that
   e1. FlowlDs and locators identifying the endpoints of AN1 and AN2, the negotiating entities, are included in the From IE and To IE of **fig.5****,**
   e2. FlowlDs and locators identifying the endpoints of AN3 and AN4, the entities between which the data transfer is to be setup, are included in the SourceEndpointlE and DestinationEndpointlE of **fig.8****.**
(f) In the first negotiation, AN2 requires AN3 the setup of a data transfer from AN3 to AN4 on a given transport service.
(g) In a fourth negotiation, AN3 requires AN4 to setup a data transfer on a given transport service.
(h) In the fourth, first and second negotiation respectively, AN4, AN3 and AN2 agree and declare completion in turn to AN3, AN2 and AN1.

### Examples of usage of Flow Mgmt messages

A Discovery message may be sent in order to ask for:
- the availability of endpoint services and their characteristics: e.g. a given kind of access selection function within an access broker.
- The existence of communication services in terms of access routes, e.g.:
   o In general towards any significant destination, or towards a subset of interest of flow endpoints (e.g. internet, mobile operators, ...).
   o In particular towards a given destination. Discovery messages can be used as a "paging request" when the endpoint locator is the identifier of a mobile AN which position is only known within the limits of a TA.
- The availability of communication services in terms of transport services, e.g.:
   o In general towards any of a given set of ANs (e.g. mobile operators).
   o In particular towards a particular destination (e.g. a user).
- The availability of a number of flows in terms of transport services, by using the Bitrate Quantity indication within TransportServiceCharacteristics (e.g. for Access Brokering).
- The Detected Set, which can then be provided in an Advertising message. Likewise, Flow Mgmt can ask for a subset of the Detected Set with given characteristics (e.g. the flows belonging to a given domain). Note that the Detected Set can carry network topology information.

Setup messages may be used to:
- require setup of a service.
- Setup a given flow, typically identified with a FlowlD (that could have been already mentioned within discovery / advertising messages), and described either with a FlowDescription, or simply with reference to a FlowID.

Reserve messages are used to reserve resources for specified services.

Modify messages are used to modify active flows, including handover.

Suspend / resume and teardown messages can be used to temporarily or indefinitely stop a service.

Measure messages are used to ask for measurements, specifying reporting conditions.
- Measurements can be required e.g. on Bitrate, ErrorRate, Delay.
- Reporting characteristics can be specified:
   o on request.
   o Periodic.
   o On modification (e.g. BER> X% & latency>2 seconds).
   o In case of unpredicted events (flow failure, threats for the flow, ...).

Advertising messages:
- are used to advertise availability of flows at different levels of detail (endpoints/access route / transport service). Availability of transport services for different Reason-Priority (e.g. for control signalling) could be advertised.
- Are sent either:
   o for pure advertising reasons towards one or more NEs, in which case the advertisement may be periodical or event triggered (e.g. when a new flow is available).
   o As a response to a Discovery message, providing description and availability of flows according to the requirements.
- Are sent from one NE towards another NE, a group of NEs, or any NE in reach of this message.
- Can also provide the functionality of a "paging response" when the source or destination endpoint locator is the identifier of a mobile AN which position was only known within the limits of a TA. In this case the Flow Mgmt advertising message will possibly resolve the endpoint locator in one that identifies the endpoint at cell level, potentially providing also description of available transport services for that endpoint. Alternatively, if the endpoint can no longer be reached, this may be reported with an error message (e.g. in a scenario where the related Flow Mgmt discovery message was addressed to a single NE that should have tried to page yet another NE, with unsuccessful outcome).

Report messages, including the message types of ACK, UNACK, Complete and Measurement can be used:
- for reporting on flow setup, resource reservation, suspend/resume, teardown as well as for reporting on flow measurements.
- To report on the reservation, setup, modification, suspend/resume or teardown of a flow:
   o ACK (message received, action will be taken).
   o Complete (UP impacted accordingly, e.g. data forwarded on the access route).
   o NACK + best offer (offer for a flow of similar characteristics).
   o Failure (+ reason).
- To report on flow measurements:
   o ACK (measurements will be reported).
   o Ok (flow is running properly, according to characteristics).
   o NACK + best offer (the requested measurement cannot be provided e.g. due to cost, other measurements can be provided instead).
   o Values of ErrorRate, Delay (max, min, average, variance), Bitrate.
   o Message: may specify error messages or warnings, e.g.:
      ■ Failure, optionally including:
         ■ Reason: reference to a standard error, or other description of the failure reason.
      ■ Flow has been redirected on links that may not guarantee the requirements.

### TERMINOLOGY

- ACK: Acknowledgement
- ACS: Ambient Control Space
- ACY: Ambient ConnectivitY
- ADSL: Asymmetric Digital Subscriber Line
- AN: Ambient Network
- ANI: Ambient Networks Interface
- ARI: Ambient Resource Interface
- AS: Active Set
- ASI: Ambient Service Interface
- BAN: Body Area Network
- BSC: Base Station Controller
- CA: Composition Agreement
- CRRM: Common Radio Resource Management
- CSD: Circuit Switched Data
- DCCP: Datagram Congestion Control Protocol
- DEEP: Destination Endpoint Exploration Protocol
- DL: Downlink
- DS: Detected Set (the set of all detected access resources)
- ECSD: Enhanced CSD
- E-DEEP: Extended-DEEP
- EDGE: Enhanced Data rates for GSM Evolution
- EGIST: Extended Generic Internet Signalling Transport
- EGPRS: Enhanced GPRS
- FDD: Frequency Division Duplexing
- GANS: Generic Ambient Network Signalling
- GIST: Generic Internet Signalling Transport
- GLL: Generic Link Layer
- GPRS: General Packet Radio Service
- GSM: Global System for Mobile communications
- HCR: High Chip Rate
- HIP: Host Identity Protocol
- HLR: Home Location Register
- HSCSD: High Speed Circuit Switched Data
- HSDPA: High Speed Downlink Packet Access
- HSUPA: High Speed Uplink Packet Access
- HTTP: Hyper Text Transfer Protocol
- IE: Information Element
- IEEE: Institute of Electrical and Electronics Engineers
- ILS: IP Layer Security
- IP: Internet Protocol
- IrDA: Infrared Data Association
- IST: Information Society Technologies
- LAN: Local Area Network
- LCR: Low Chip Rate
- MAC: Medium Access Control
- M/B: Multicast/Broadcast
- MIP: Mobile IP
- MRA: Multi-Radio Access
- MRMH: Multi Route Multi Hop
- MRRM: Multi-Radio Resource Management
- MRRM AS: MRRM Active Set
- MRRM CS: MRRM Candidate Set
- MRRM DS: MRRM Detected Set
- MRoTD: Multi Route Transmission Diversity
- MRTD: Multi Radio Transmission Diversity
- NACK: Not Acknowledged
- PAN: Personal Area Network
- QoS: Quality of Service
- RA: Radio Access
- RAT: Radio Access Technology
- RNC: Radio Network Controller
- RRM: Radio Resource Management
- RTT: Round Trip Time
- SCTP: Stream Control Transmission Protocol
- SIP: Session Initiation Protocol
- TA: Tracking Area
- TCP: Transmission Control Protocol
- TDD: Time Division Duplexing
- TLS: Transport Layer Security
- UDP: User Datagram Protocol
- UE: User Equipment
- UL: Uplink
- UMTS: Universal Mobile Telecommunication System
- USB: Universal Serial Bus
- UT: User Terminal
- UTRAN: Universal Terrestrial Radio Access Network
- VLR: Visitor Location Register
- WiMAX: Worldwide Interoperability for Microwave Access
- WINNER: Wireless World Initiative New Radio
- WLAN: Wireless Local Area Network
- XML: extensible Markup Language

## Claims

1. Method for naming endpoints that are referable to points of attachment to network elements for exchanging information messages between access network interfaces belonging to communication networks with different access technologies, or ambient networks (AN1,..., AN6), **characterized in that** includes the steps of:
- assigning to the endpoint a first information element (Endpoint/Locator) that specifies at least an address according to a communication protocol at any layer of a protocol stack used at the access network interface for that network element, and
- assigning to the endpoint a second information element (Endpoint/FlowID) uniquely identifying said endpoint within the scope of a negotiation of services consisting of two or more negotiation messages, including said first and second information elements (Endpoint/Locator, Endpoint/FIowID), exchanged between network elements.

2. The method of claim 1, **characterised in that** said endpoint is attached to the originator (From) of a negotiation message.

3. The method of claim 1, **characterised in that** said endpoint is attached to the recipient (To) of a negotiation message.

4. The method of claim 1, **characterised in that** said endpoint is attached to the source of a transport service (FlowDescription/SourceEndpoint).

5. The method of claim 1, **characterised in that** said endpoint is attached to the destination of a transport service (FlowDescription/DestinationEndpoint).

6. The method of claim 1, **characterized in that** includes the further step of associating to said second information element (Endpoint/FlowID) a third information element of the same type of the second one (Endpoint/ReferenceFlowID/FlowID) uniquely identifying the network element for which the endpoint represents a point of attachment within the scope of the same negotiation of services.

7. The method of claim 6 **characterised in that** includes within a message in the scope of the same negotiation of services the further step of associating to said second information element (Endpoint/FlowID) a fourth information element (FlowDescription/FlowID) uniquely identifying a communication service and the related transport service between two or more network elements attached to respective endpoints.

8. The method of claim 7, **characterised in that** includes within a message in the scope of the same negotiation of services the further step of associating to said fourth information element (FlowDescription/ReferenceFlowID/FlowID) a fifth information element (FlowDescription/FlowID) uniquely identifying an active data transfer which avails of said transport service.

9. The method of claim 8, **characterised in that** includes in the scope of the same negotiation of services the further steps of:
- associating to said first information element (Endpoint/Locator) a sixth information element (DataReference/.../Endpoint/Locator) of the same type of the first information element;
- associating to said second information element (Endpoint/FlowID) a seventh information element (DataReference/...IEndpoinVFlowlD) of the same type of the second information element;
- identifying the endpoint where data will be forwarded (DataReference) by means of the sixth and seventh information elements.

10. The method of claim 1, **characterised in that** includes the further step of associating to said first information element (Endpoint/Locator) yet another information element (LocatorManagement) indicating the methodology through which the first information element has to be resolved (DEEP, E-DEEP).

11. The method of claim 1, **characterised in that** includes the further step of associating to said first information element (Endpoint/Locator) yet another information element (LocatorManagement) indicating the endpoint in charge of resolving the information.

12. The method of claim 1 **characterised in that** includes the further step of associating to said first information element (Endpoint/Locator) yet another information element (State) indicating a state information including connected state or idle state.

13. The method of claim 12 **characterised in that** includes the further step of associating to said first information element (Endpoint/Locator) yet another information element (Lifetime) indicating a lifetime for the state information and the associated first information element (Endpoint/Locator).
